# EUROPÄISCHE PATENTANMELDUNG

(11) **EP 2 957 454 A2**
(43) Veröffentlichungstag der Anmeldung: **23.12.2015**
(21) Anmeldenummer: 15150564.1
(22) Anmeldetag: 09.01.2015
(51) Int. Cl.: B60N 2/02, B60N 2/20

(54) **Kraftfahrzeugschloss**

(30) Priorität: 28.05.2014 DE 202014102529 U
(71) Anmelder: Kirchhoff GmbH & Co. KG., 58553 Halver (DE)
(72) Erfinder: KILWING, Henning, 58840 Plettenberg (DE); DÜRHAGEN, Volker, 42897 Remscheid (DE)
(74) Vertreter: Köchling, Conrad-Joachim

(57) **Zusammenfassung**

Die Erfindung betrifft ein Kraftfahrzeugschloss als Hinterlehnenschloss, mit einem Schließbügel (1), einer Drehfalle (2) mit einer etwa U-förmigen Ausnehmung (3a, 3b, 3c) mit einem ersten Schenkel (4a, 4b, 4c) und einem zweiten Schenkel (5a, 5b, 5c) zur Aufnahme und Fixierung des Schließbügels (1), und einer drehbar befestigten Sperrklinke (7), die in der Schließlage die Drehfalle (2) sperrt, wobei die Drehfalle (2) aus zwei Teilen (2a, 2b) besteht, die um eine beiden gemeinsame Schwenkachse (6) verschwenkbar sind, wobei das erste Teil (2a) der Drehfalle (2) die etwa U-förmige Ausnehmung (3a) aufweist, innerhalb derer in der Schließlage der Schließbügel (1) angeordnet ist, wobei in der Schließlage das zweite Teil (2b) der Drehfalle (2) relativ zum ersten Teil (2a) der Drehfalle (2) verschwenkt ist und an dem Schließbügel (1) anliegt und an den Schließbügel (1) angedrückt gehalten ist, so dass der Schließbügel (1) zwischen dem zweiten Schenkel (5a) der U-förmigen Ausnehmung (3a) einerseits und dem zweiten Teil (2b) der Drehfalle (2) andererseits spielfrei fixiert ist.

## Beschreibung

Die Erfindung betrifft ein Kraftfahrzeugschloss, beispielsweise als Hinterlehnenschloss, zumindest bestehend aus einem Schließbügel, der beispielsweise an der Hinterseite einer Rückenlehne einer Rücksitzbank eines Kraftfahrzeugs angeordnet ist oder karosserieseitig befestigt ist, einer Drehfalle mit einer etwa U-förmigen Ausnehmung mit einem ersten Schenkel und einem zweiten Schenkel zur Aufnahme und Fixierung des Schließbügels, die karosseriefest oder an einer Rückenlehne eines Fahrzeugs um eine Achse drehbar befestigt ist, beispielsweise mittelbar an oder nahe der C-Säule eines Kraftfahrzeugs angeordnet ist, und in einer Schließlage Teile des Schließbügels umgreift und diesen in der Schließlage fixiert und in einer Loslage freigibt, wobei die U-förmige Ausnehmung eine Breite hat, die mindestens gering größer ist als der Querschnitt des in diese eingreifenden Teils des Schließbügels, und einer drehbar karosserieseitig oder lehnenseitig befestigten Sperrklinke, die in der Schließlage die Drehfalle sperrt, wobei die Drehfalle und die Sperrklinke jeweils um eine Schwenkachse gleichsinnig oder gegensinnig zueinander in die Schließlage verschwenkbar sind, in der Teile der Sperrklinke Teile der Drehfalle hintergreifen und diese in dieser Lage sperren, sodass die Rückenlehne in der Schließlage fixiert und in der Loslage verschwenkbar ist.

Derartige Schlösser sind im Stand der Technik bekannt und werden an Kraftfahrzeugen verwendet, um dem Benutzer des Kraftfahrzeuges zu ermöglichen, die Rückenlehne des Fahrgastraumes üblicherweise nach vorne in Fahrtrichtung zu verschwenken, um somit den Laderaum des Kraftfahrzeuges zu vergrößern.

Bei derartigen Schlössern kann im Gegensatz zu der eingangs genannten Anordnung auch eine im Wesentlichen umgekehrte Anordnung vorgesehen sein, das heisst, dass der Schließbügel an Karosserieteilen und das Hinterlehnenschloss mit der Drehfalle und der Sperrklinke an oder als Bestandteil der Rückenlehne ausgebildet ist. Beide Anordnungsarten finden im heutigen Kraftfahrzeugbau häufig Verwendung.

Bei einem derartigen Kraftfahrzeugschloss ist es bekannt, den Schließbügel aus der Loslage über eine Zwischenlage in die Schließlage zu verbringen. Dabei trifft beim Verschwenken der Rückenlehne mit dem daran angeordneten Schließbügel der Schließbügel zuerst auf Teile der Drehfalle, welche im weiteren Verlauf den Schließbügel mit ihrer üblicherweise etwa U-förmigen Ausnehmung den Schließbügel umgreifen und in der Schließlage sichern. Anschließend oder nahezu zeitgleich verschwenkt die Sperrklinke gegensinnig oder gleichsinnig zur Schwenkrichtung der Drehfalle um die Drehfalle in dieser Lage zu sperren. Ein Lösen des Hinterlehnenschlosses erfolgt dabei in umgekehrter Reihenfolge.

Bei derartigen Fahrzeugschlössern ist es nachteilig, dass der Schließbügel, der in der Schließlage zwischen den Schenkeln der U-förmigen Ausnehmung der Drehfalle angeordnet ist, nicht spielfrei zwischen den Schenkeln sitzt, sodass bei Bewegung des Kraftfahrzeuges Geräusche, beispielsweise Klappergeräusche entstehen können. Dies ist vom Verbraucher unerwünscht.

Bei einer im Stand der Technik bekannten Lösung wird zur Vermeidung dieser Klappergeräusche beispielsweise ein Schiebekeil gegen den sich zwischen den Schenkeln der U-Form befindlichen Schließbügel per Federkraft gedrückt, sodass der Schließbügel nahezu spielfrei zwischen den Schenkeln der U-Form angeordnet ist, und somit entstehende Klappergeräusche weitestgehend vermieden sind.

Eine derartige Lösung erfordert zusätzliche Teile, die üblicherweise noch gegen die Kraft einer Feder angeordnet werden und somit zusätzliche Kosten verursachen.

Aufgrund des eingangs genannten Standes der Technik liegt der vorliegenden Erfindung die Aufgabe zugrunde, ein Kraftfahrzeugschloss der eingangs genannten Art zu schaffen, bei dem ein spielfreier Sitz des Schließbügels innerhalb der Drehfalle ermöglicht ist, sodass die Entstehung von unerwünschten Klappergeräuschen vermieden ist, welches kostengünstig und einfach zu fertigen ist und dabei eine hohe Lebensdauer aufweist.

Zur Lösung dieser Aufgabe schlägt die Erfindung vor, dass die Drehfalle aus zwei Teilen besteht, die um eine gemeinsame Schwenkachse gemeinsam miteinander und relativ zueinander verschwenkbar sind, wobei das erste Teil der Drehfalle die etwa U- förmige Ausnehmung aufweist, innerhalb derer in der Schließlage der Schließbügel angeordnet ist, wobei in der Schließlage das zweite Teil der Drehfalle relativ zum ersten Teil der Drehfalle verschwenkt ist und an dem Schließbügel anliegt und an den Schließbügel angedrückt gehalten ist, sodass der Schließbügel zwischen dem zweiten Schenkel der U-förmigen Ausnehmung einerseits und dem zweiten Teil der Drehfalle andererseits spielfrei fixiert ist.

Bei einer derartigen Lösung, bei der die Drehfalle aus zwei Teilen besteht, verschwenkt die Drehfalle nach Auftreffen des Schließbügels auf den ersten Schenkel der Drehfalle zunächst in an sich bekannter Art und Weise. Anschließend, wenn die Drehfalle aus der Loslage in die Schließlage verschwenkt ist und der Schließbügel zwischen den Schenkeln der Drehfalle angeordnet ist, verschwenkt das zweite Teil der Drehfalle geringfügig weiter in Schließrichtung um den Schließbügel zwischen dem zweiten Schenkel der U-förmigen Ausnehmung einerseits und diesem zweiten Teil der Drehfalle andererseits spielfrei zu fixieren. Diese Fixierung erfolgt dabei dadurch, dass sich die Sperrklinke in an sich bekannter Art und Weise in einer zur Drehfalle gegensinnigen Richtung verschwenkt, um mit Teilen die beiden Teile der Drehfalle zu hintergreifen und in der Schließlage zu sperren und insbesondere das zweite Teil der Drehfalle an den Schließbügel anzudrücken.

Mittels einer derartigen Lösung ist ein spielfreier Sitz des Schließbügels innerhalb der etwa U-förmigen Ausnehmung der Drehfalle ermöglicht, sodass die Entstehung von Klappergeräuschen durch den sich innerhalb der Drehfalle bewegenden Schießbügel ausgeschlossen ist. Zudem besteht eine derartige Lösung nur aus wenigen Bauteilen und kann somit kostengünstig gefertigt werden und weist dabei eine hohe Lebensdauer auf.

Insbesondere kann besonders bevorzugt vorgesehen sein, dass das zweite Teil der Drehfalle eine Druckfläche oder Druckkante aufweist, die in einer Zwischenlage zwischen der Loslage und der Schließlage mit einer der Ausnehmung benachbarten Randkante mit der Randkante des ersten Schenkels abschließt sowie mit der Randkante der Druckfläche über die Randkante des ersten Schenkels in die Ausnehmung vorragt oder hinter dieser zurückliegt und etwa deckungsgleich parallel zum ersten Schenkel der U-förmigen Ausnehmung angeordnet ist, die in der Schließlage an dem Schließbügel anliegt und an den Schließbügel angedrückt gehalten ist, sodass der Schließbügel zwischen dem zweiten Schenkel der U-förmigen Ausnehmung und der Druckfläche oder Druckkante des zweiten Teils der Drehfalle spielfrei fixiert ist.

Mittels einer derartigen Druckfläche oder Druckkante kann, nachdem sich der Schließbügel bereits in der zwischen den Schenkeln der U-Form angeordneten Lage befindet, auf einfache Art und Weise durch Weiterverschwenken des zweiten Teils der Drehfalle der Schließbügel eingeklemmt und somit spielfrei gehalten werden. Das gegenüber dem ersten Teil der Drehfalle weitere Verschwenken des zweiten Teils der Drehfalle kann dabei beispielsweise durch eine an der Sperrklinke ausgebildete Kontur erfolgen, die beim Sperren der Drehfalle in der Schließlage gleichzeitig das zweite Teil der Drehfalle geringfügig weiter relativ zum ersten Teil der Drehfalle entgegen Schließrichtung verschwenkt.

Dabei kann besonders bevorzugt vorgesehen, dass der Abstand der beiden Randkanten der Schenkel der U-förmigen Ausnehmung geringfügig größer ist als der Durchmesser des Schließbügels.

Hierdurch ist es sichergestellt, dass der Schließbügel in der Zwischenlage, in der noch kein Druck durch das zweite Teil der Drehfalle auf den Schließbügel ausgeübt wird, noch mit geringem Spiel zwischen den beiden Schenkeln der etwa U-förmigen Ausnehmung der Drehfalle angeordnet ist. Somit muss lediglich anschließend durch das zweite Teil der Drehfalle nur eine geringe Bewegung ausgeführt werden, um den spielfreien Sitz des Schließbügels zwischen dem zweiten Teil der Drehfalle und dem zweiten Schenkel der U-förmigen Ausnehmung zu ermöglichen.

Darüber hinaus kann besonders bevorzugt vorgesehen sein, dass an der Sperrklinke eine etwa U-förmige, hakenartige Kontur ausgebildet ist, die in der die Drehfalle sperrenden Lage Bereiche des ersten und des zweiten Teils der Drehfalle umgreift oder hintergreift und gegen ein Verschwenken dieser Teile in Richtung der Loslage sperrt und gegebenenfalls das zweite Teil der Drehfalle geringfügig entgegen der Schließrichtung relativ zum ersten Teil der Drehfalle verschwenkt.

Durch eine derartige Ausbildung der Sperrklinke ist somit zum einen ein sicheres Verbleiben der Drehfalle in der Schließlage und zum anderen ein spielfreier Halt des Schließbügels innerhalb der zweiteiligen Drehfalle sichergestellt.

Dabei kann insbesondere besonders bevorzugt vorgesehen sein, dass die zweiteilige Drehfalle und/ oder die Sperrklinke jeweils gegen die Kraft einer Feder in der Schließlage gehalten ist beziehungsweise sind.

Hierdurch erfolgt gegen die Kraft einer Feder ein Zurückschwenken der zweiteiligen Drehfalle aus der Schließlage in die Loslage, sobald die Sperrklinke vom Benutzer gelöst wird. Zudem ist hierdurch eine Fehlschließung, das heisst, wenn sich die Drehfalle in der Schließlage befindet und anschießend beispielsweise manuell der Schließbügel zugeführt wird, verhindert.

Schließlich kann dabei besonders bevorzugt vorgesehen sein, dass an dem ersten und / oder dem zweiten Teil der Drehfalle Mittel angeordnet sind, die die Schwenkbewegung zumindest in Richtung der Loslage begrenzen.

Derartige Mittel, die beispielsweise durch eine Führung an dem zweiten Teil der Drehfalle und einem Mitnahmezapfen an dem ersten Teil der Drehfalle gebildet sein können, bestimmen den Stellweg der beiden Teile der Drehfalle bei einer Verschwenkung relativ zueinander.

Als alternative Lösung der eingangs genannten Aufgabe schlägt die Erfindung vor, dass an der Sperrklinke eine Druckfläche oder Druckkante ausgebildet oder angeordnet ist, die in der Schließlage an dem Schließbügel anliegt und an den Schließbügel angedrückt gehalten ist, sodass der Schließbügel spielfrei zwischen der Druckfläche oder Druckkante der Sperrklinke einerseits und der Randkante des zweiten Schenkels der U-förmigen Ausnehmung der Drehfalle andererseits fixiert ist.

Auch bei einer derartigen Lösung trifft beim Verschwenken aus der Loslage in die Schließlage der Schließbügel zuerst auf den ersten Schenkel der Drehfalle, um sich während des Verschwenkens der Drehfalle in einen Bereich zwischen dem ersten und dem zweiten Schenkel der Drehfalle hin zu bewegen. Anschließend, nachdem sich die Drehfalle bereits in der Schließlage befindet, verschwenkt die Sperrklinke aus der Loslage in die Schließlage und sperrt zum einen die Drehfalle gegen eine Schwenkbewegung in Richtung der Loslage und übt zum anderen mit einer an der Sperrklinke angeordneten Druckfläche oder Druckkante Druck auf Teile des Schließbügels aus, sodass dieser spielfrei zwischen der Druckfläche oder Druckkante der Sperrklinke einerseits und dem zweiten Schenkel der U-förmigen Ausnehmung der Drehfalle andererseits fixiert ist.

Bei einer derartigen Lösung werden nur wenige Teile benötigt, sodass auch eine derartige Lösung kostengünstig und einfach herstellbar ist und dabei eine hohe Lebensdauer aufweist. Zudem ist durch eine derartige Lösung ein spielfreier und somit geräuschloser Sitz des Schießbügels innerhalb der Drehfalle in der Schließlage ermöglicht.

Dabei kann besonders bevorzugt vorgesehen sein, dass der erste Schenkel der U-förmigen Ausnehmung der Drehfalle eine Verlängerung als Fang für den Schließbügel aufweist, die eine Einlaufschräge für den Schließbügel beim Verstellen aus der Loslage in die Schließlage bildet, die insbesondere durch eine Verkröpfung oder eine Schrägfläche gebildet ist.

Hierbei ist der erste Schenkel der U-förmigen Ausnehmung länger ausgebildet als der zweite Schenkel, sodass dieser beim Verschwenken aus der Loslage in die Schließlage zuerst vom Schließbügel kontaktiert wird, um anschließend weiter zu Verschwenken und den Schießbügel zwischen dem ersten und dem zweiten Schenkel aufzunehmen. Die Einlaufschräge kann dabei durch eine Abkröpfung oder eine Schrägfläche gebildet sein, entlang derer der Schließbügel in die Schließlage gleiten kann.

Darüber hinaus kann besonders bevorzugt vorgesehen sein, dass die Sperrklinke einen hakenartigen Vorsprung aufweist, der in der Schließlage den zweiten Schenkel der U-förmigen Ausnehmung der Drehfalle hintergreift und in dieser Lage sperrt, wobei das den hakenartigen Vorsprung aufweisende Ende der Sperrklinke abgekröpft an der Sperrklinke ausgebildet oder angeordnet ist.

Durch die Anordnung eines derartigen abgekröpften hakenartigen Vorsprunges ist zum einen ein sicherer Halt der Drehfalle in der Schließlage und zum anderen eine besonders schlanke Bauform des Schlosses ermöglicht.

Als weitere alternative Lösung der eingangs genannten Aufgabe schlägt die Erfindung vor, dass zusätzlich zur Drehfalle und zur Sperrklinke ein Sperrschieber vorgesehen ist, der in der Schließlage mit einer Druckfläche am Schließbügel anliegt und an den Schließbügel angedrückt gehalten ist, sodass der Schließbügel spielfrei zwischen der Druckfläche des Sperrschiebers einerseits und dem ersten Schenkel der U-förmigen Ausnehmung der Drehfalle andererseits fixiert ist.

Auch hierbei ist zunächst der Schließbügel innerhalb der U-förmigen Ausnehmung der Drehfalle in an sich bekannter Art und Weise mit Bewegungsspiel angeordnet, und anschließend durch den Kontakt mit Teilen des Sperrschiebers spiegelfrei innerhalb der U-förmigen Ausnehmung der Drehfalle fixiert. Bei dieser erfindungsgemäßen Lösung trifft der Schließbügel beim Verschwenken aus der Loslage in die Schießlage zunächst auf den verlängerten zweiten Schenkel der U-förmigen Ausnehmung der Drehfalle, um anschließend, wenn sich die Drehfalle bereits in der Schließlage befindet, in einem Bereich der U-förmigen Ausnehmung zwischen den dem ersten und dem zweiten Schenkel der U-förmigen Ausnehmung angeordnet zu sein. Nachdem der Schließbügel in dieser Lage angeordnet ist, erfolgt eine Verschiebung des Sperrschiebers entlang der Drehfalle und der Sperrklinke derart, dass die Druckfläche des Sperrschiebers den Schließbügel kontaktiert und dabei angedrückt an den Schließbügel gehalten ist, sodass der Schließbügel spielfrei zwischen der Druckfläche des Sperrschiebers einerseits und dem ersten Schenkel der U-förmigen Ausnehmung der Drehfalle andererseits fixiert ist.

Somit ist ein spielfreier und geräuschloser Sitz des Schließbügels ermöglicht. Auch eine derartige Lösung ist kostengünstig und einfach herstellbar und weist eine hohe Lebensdauer auf.

Um eine besonders einfache Verschiebung des Sperrschiebers gegenüber der Drehfalle und der Sperrklinke zu ermöglichen, kann besonders bevorzugt vorgesehen sein, dass der Sperrschieber auf den Schwenkachsen der Drehfalle und der Sperrklinke längsverschieblich angeordnet oder geführt ist, wobei der Sperrschieber ein Langloch als Führungsbestandteil aufweist, das länger ist als der Abstand der Schwenkachsen voneinander, wobei diese Überlänge den Stellweg des Sperrschiebers bestimmt.

Durch ein derartiges Langloch ist zum einen eine einfache Verschiebung gegenüber der Drehfalle und der Sperrklinke ermöglicht, und zum anderen der Stellweg beim Verstellen des Sperrschiebers bestimmbar.

Zudem kann besonders bevorzugt vorgesehen sein, dass die Schenkel der U-Form der Drehfalle unterschiedliche Länge aufweisen, wobei der dem Sperrschieber nahe zweite Schenkel länger ausgebildet ist als der dem Sperrschieber entfernte erste Schenkel.

Weiter kann besonders bevorzugt vorgesehen sein, dass in der Loslage das freie Ende des zweiten Schenkels der U-Form der Drehfalle an oder nahe an dem freien Ende eines hakenartigen Vorsprungs der Sperrklinke anliegend gehalten ist, sodass der zweite Schenkel einen Fang für den Schließbügel bildet, wobei in der Loslage der zweite Schenkel und das Langloch des Sperrschiebers etwa eine V-Form bildend angeordnet sind und in der Schließlage gegensinnig zueinander verschwenkt sind, sodass sie nahezu parallel zueinander angeordnet sind.

Durch die in der Schließlage nahezu parallele Anordnung des zweiten Schenkels und des Langloches erfolgt eine nahezu parallele Verschiebung des Sperrschiebers gegenüber dem zweiten Schenkel beim Verschieben des Sperrschiebers in die Schließlage.

Zudem kann besonders bevorzugt vorgesehen sein, dass die Sperrklinke in der Loslage gegen die Kraft einer Feder vorgespannt und in der Schließlage zumindest teilentspannt ist.

Weiter kann besonders bevorzugt vorgesehen sein, dass an der Drehfalle eine Feder, insbesondere eine Schenkelfeder, angeordnet ist, deren erster Schenkel nahe dem freien Ende des ersten Schenkels der Drehfalle und deren zweiter Schenkel an einem an dem Sperrschieber angeordneten oder ausgebildeten Vorsprung anliegt, wobei der zweite Schenkel der Schenkelfeder eine Form aufweist, mittels derer beim Verschwenken der Drehfalle aus der Loslage in die Schließlage der Sperrschieber derart vorgespannt gehalten ist, dass die Druckfläche des Sperrschiebers am Schließbügel anliegt, sodass der Schließbügel spielfrei zwischen der Druckfläche des Sperrschiebers einerseits und dem ersten Schenkel der U-förmigen Ausnehmung der Drehfalle andererseits fixiert ist.

Durch die Anordnung einer derartigen Schenkelfeder, die auf den Sperrschieber einerseits und auf die Drehfalle andererseits einwirkt ist eine Zwangsverstellung des Sperrschiebers nach dem Verschwenken beziehungsweise kurz vor Erreichen des Endpunktes der Verschwenkung der Drehfalle in die Schließlage und zurück in die Loslage bewirkt. Somit überträgt die Schenkelfeder beim Verschwenken der Drehfalle aus der Loslage in die Schließlage Kraft auf den Sperrschieber, sodass dieser bei Erreichen der Schließlage etwa parallel zu dem zweiten Schenkel der Drehfalle verschoben wird, um mit seiner Druckfläche an dem Schließbügel anzuliegen und diesen gegen den ersten Schenkel der Drehfalle anzudrücken und in einer spielfeien Lage zu halten.

Um einen spielfreien und nahezu geräuschlosen Sitz aller sich in Eingriff befindlichen Teile in der Schließlage zu ermöglichen, kann besonders bevorzugt vorgesehen sein, dass die Sperrklinke den dem Sperrschieber abgewandten Schenkel der Drehfalle mit dem hakenartigen Vorsprung hintergreift, wobei an dem hakenartigen Vorsprung und/oder dem hintergriffenen Bereich des Schenkels schwingungs- und geräuschdämpfende Mittel, beispielsweise ein Elastomerpolster, angeordnet ist beziehungsweise sind.

Durch die Anordnung von schwingungs- und geräuschdämpfenden Mitteln wie beispielsweise einem Elastomer ist eine Geräuschbildung von sich berührenden Teilen beispielsweise beim Verschwenken aus der Loslage in die Schließlage oder zurück aus der Schießlage in die Loslage weitestgehend vermieden.

Schließlich kann besonders bevorzugt vorgesehen sein, dass die Drehfalle, die Sperrklinke und gegebenenfalls der Sperrschieber innerhalb eines Schlossgehäuses angeordnet sind, wobei die Sperrklinke um eine erste Schwenkachse und die Drehfalle um eine zweite Schwenkachse jeweils innerhalb des Gehäuses verschwenkbar sind.

Ausführungsbeispiele der Erfindung sind in den Figuren dargestellt und im Folgenden näher beschrieben.

Es zeigen:
- Figur 1: ein erstes Ausführungsbeispiel der Erfindung in der Loslage in Seitenansicht mit zweiteiliger Drehfalle;
- Figur 2: desgleichen in perspektivischer Ansicht;
- Figur 3: desgleichen in der Schließlage in Seitenansicht;
- Figur 4: ein zweites Ausführungsbeispiel der Erfindung in Seitenansicht in der Loslage;
- Figur 5: desgleichen in der Schließlage;
- Figur 6: desgleichen in perspektivischer Ansicht;
- Figur 7: desgleichen in einer Zwischenlage;
- Figur 8: ein drittes Ausführungsbeispiel der Erfindung in der Schließlage;
- Figur 9: desgleichen in der Loslage;
- Figur 10: desgleichen in perspektivischer Ansicht.

In den Figuren sind verschiedene Ausführungsbeispiele für Kraftfahrzeugschlösser in Form von Hinterlehnenschlössern gezeigt. Dabei bestehen alle Schlösser zumindest aus einem Schließbügel 1, der beispielsweise an der Hinterseite einer Rückenlehne einer Rücksichtsbank eines Kraftfahrzeuges angeordnet ist. Zudem bestehen alle Schlösser aus einer Drehfalle 2 mit einer etwa U-förmigen Ausnehmung 3a, 3b, 3c mit einem ersten Schenkel 4a, 4b, 4c und einem zweiten Schenkel 5a, 5b, 5c zur Aufnahme und Fixierung des Schließbügels 1. Die Drehfalle 2 ist in den Ausführungsbeispielen karosseriefest um eine Achse 6 drehbar befestigt. Die Befestigung kann beispielsweise mittelbar an oder nahe an der C-Säule eines Kraftfahrzeuges erfolgen. In einer Schließlage umgreift die Drehfalle 2 mit ihrer U-förmigen Ausnehmung 3a, 3b, 3c, Teile des Schließbügels 1 und fixiert den Schließbügel 1 in der Schließlage. Die Drehfalle 2 gibt den Schließbügel 1 in der Loslage frei, so dass die Rückenlehne beispielsweise in Fahrtrichtung des Fahrzeugs verschwenkt werden kann. Dabei hat die U-förmige Ausnehmung 3a, 3b, 3c eine Breite, die mindestens geringfügig größer ist, als der Querschnitt des in diese eingreifenden Teils des Schließbügels 1. Zudem umfasst das Kraftfahrzeugschloss eine Sperrklinke 7, die in der Schließlage die Drehfalle 2 sperrt. Dabei sind die Drehfalle 2 und die Sperrklinke 7 jeweils um eine Schwenkachse 6 beziehungsweise 8 gegensinnig zueinander in die Schließlage und zurück in die Loslage verschwenkbar. In der Schließlage hintergreifen Teile der Sperrklinke 7 Teile der Drehfalle 2 und sperren diese in dieser Lage, sodass die Rückenlehne in der Schließlage fixiert und in der Loslage verschwenkbar ist.

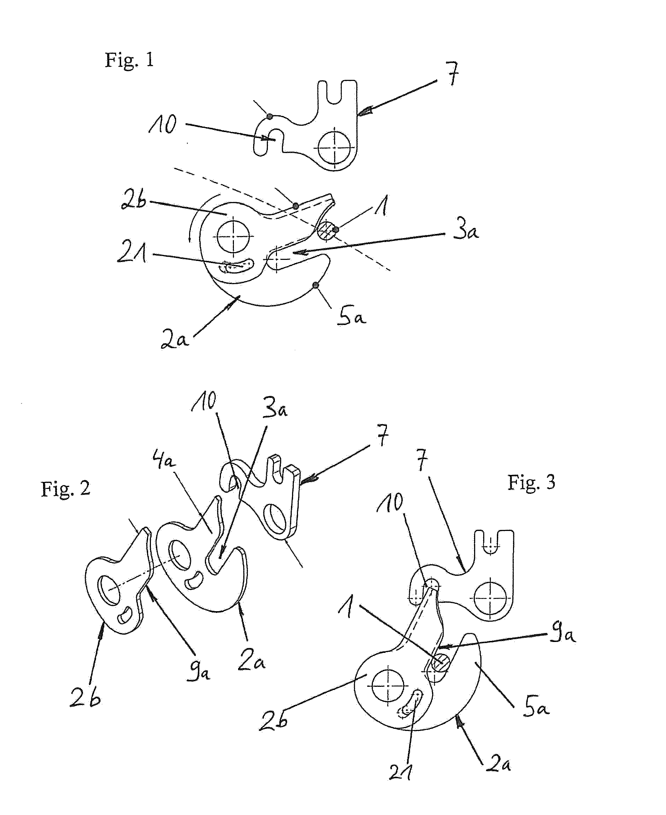

In einem ersten Ausführungsbeispiel der Erfindung besteht, wie aus den Figuren 1 bis 3 ersichtlich, die Drehfalle 2 aus zwei Teilen 2a, 2b. Die beiden Teile 2a, 2b der Drehfalle 2 sind gemeinsam um die Schwenkachse 6 miteinander und relativ zueinander verschwenkbar. Dabei weist das erste Teil 2a der Drehfalle 2 die etwa U-förmige Ausnehmung 3a auf, innerhalb derer in der Schließlage der Schließbügel 1 angeordnet ist. Beim Verschwenken in die Schließlage verschwenkt zusätzlich das zweite Teil 2b der Drehfalle 2 relativ zum ersten Teil 2a der Drehfalle 2 und liegt in der gegenüber dem ersten Teil 2a verschwenkten Lage an dem Schließbügel 1 an. Dabei ist das zweite Teil 2b der Drehfalle 2 an den Schließbügel 1 angedrückt gehalten, sodass der Schließbügel 1 zwischen dem zweiten Schenkel 5a der U-förmigen Ausnehmung 3a einerseits und dem zweiten Teil 2b der Drehfalle 2 andererseits spielfrei fixiert ist. Hierdurch ist die Entstehung von Klappergeräuschen durch Kontakt zwischen dem Schließbügel 1 und Teilen der Drehfalle 2 vermieden.

Das zweite Teil 2b der Drehfalle 2 weist eine Druckfläche 9a auf, die in einer Zwischenlage zwischen der Loslage und der Schließlage etwa deckungsgleich parallel zum ersten Schenkel 4a der U-förmigen Ausnehmung 3a angeordnet ist. Die Druckfläche 9a des zweiten Teils 2b der Drehfalle 2 liegt in der Schließlage an dem Schließbügel 1 an und ist an diesen angedrückt gehalten. Hierdurch ist der Schließbügel 1 zwischen dem zweiten Schenkel 5a der U-förmigen Ausnehmung 3a und der Druckfläche 9a des zweiten Teils 2b der Drehfalle 2 spielfrei fixiert. Alternativ und in den Figuren nicht gezeigt kann der zweite Teil der 2b der Drehfalle 2 auch anstelle der Druckfläche 9a eine Druckkante aufweisen.

Der Abstand der beiden Schenkel 4a, 5a der U-förmigen Ausnehmung 3a ist dabei geringfügig größer als der Durchmesser des Schließbügels 1, sodass ein einfaches und sicheres Einführen des Schließbügels 1 in den zwischen den Schenkeln 4a, 5a gebildeten Bereich erfolgen kann.

Um ein Verbleiben der Drehfalle 2 in der Schließlage sicherzustellen, ist an der Sperrklinke 7 eine in diesem Ausführungsbeispiel etwa U-förmige, hakenartige Kontur 10 ausgebildet. Die hakenartige Kontur 10 umgreift in der die Drehfalle 2 sperrenden Schließlage Bereiche des ersten und des zweiten Teils 2a, 2b der Drehfalle 2 und sperrt diese Teile 2a, 2b gegen ein Verschwenken in Richtung der Loslage. Zudem wird durch die hakenartige Kontur 10 Druck auf das zweite Teil 2b der Drehfalle 2 ausgeübt, um das zweite Teil der Drehfalle 2 geringfügig entgegen der Schließrichtung relativ zum ersten Teil 2a der Drehfalle 2 zu verschwenken, sodass es an den Schließbügel 1 angedrückt gehalten ist und diesen spielfrei in der Schließlage fixiert. Dabei können sowohl die zweiteilige Drehfalle 2 als auch die Sperrklinke 7 jeweils gegen die Kraft einer Feder in der Schließlage gehalten sein.

Zudem sind an dem ersten und dem zweiten Teil 2a beziehungsweise 2b der Drehfalle 2 Mittel 21 angeordnet, die die Schwenkbewegung zumindest in Richtung der Loslage des zweiten Teils 2b der Drehfalle 2 gegenüber dem ersten Teil 2a der Drehfalle 2 begrenzen. Diese Mittel 21 können dabei beispielsweise durch einen Steg oder Vorsprung, der in einer am anderen Teil ausgebildeten Nut geführt ist, gebildet sein.

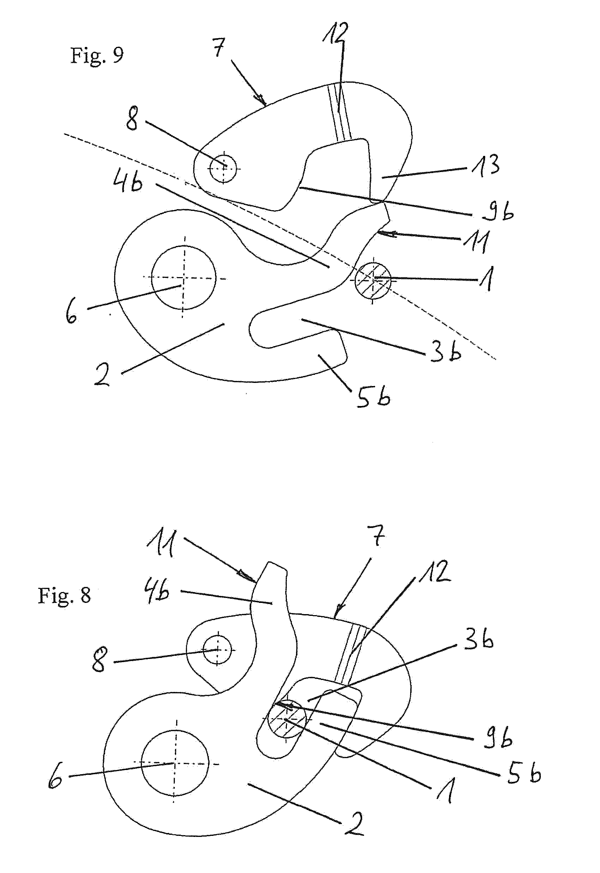

In einem weiteren, in den Figuren 8 bis 10 gezeigten Ausführungsbeispiel der Erfindung ist an der Sperrklinke 7 eine Druckfläche 9b ausgebildet. Die Druckfläche 9b liegt in der Schließlage (Figur 8) an dem Schließbügel 1 an und ist an diesen angedrückt gehalten. Hierdurch ist der Schließbügel 1 spielfrei zwischen der Druckfläche 9b der Sperrklinke 7 einerseits und dem zweiten Schenkel 5b der U-förmigen Ausnehmung 3b der Drehfalle 2 andererseits fixiert. Dabei weist der erste Schenkel 4b der U-förmigen Ausnehmung 3b der Drehfalle 2 eine Verlängerung 11 als Fang für den Schließbügel 1 auf. Die Verlängerung 11 bildet eine Einlaufschräge für den Schließbügel 1 beim Verstellen aus der Loslage in die Schließlage. Die eine Einlaufschräge bildende Verlängerung 11 kann dabei durch eine Abkröpfung oder eine Schrägfläche gebildet sein.

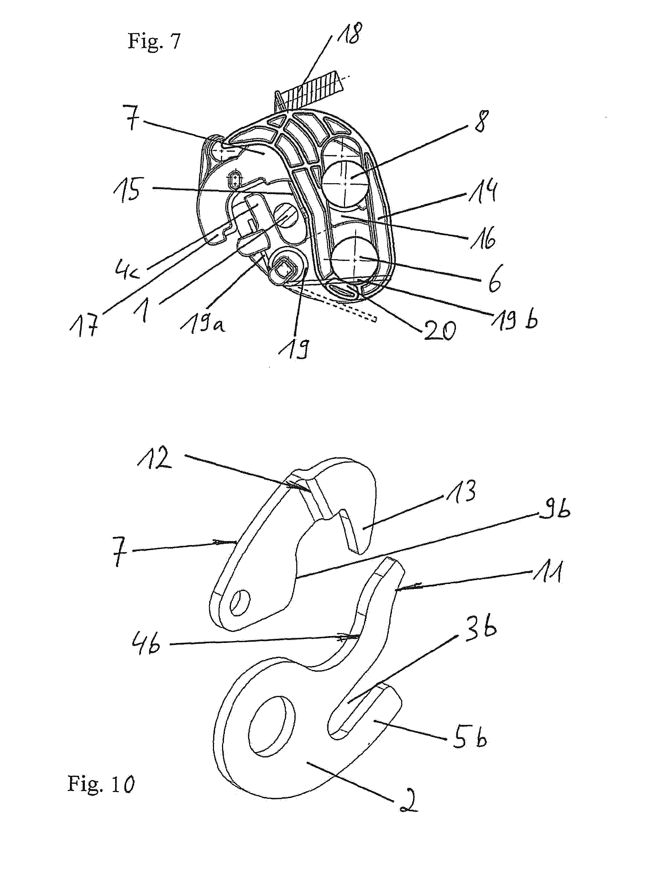

Wie insbesondere aus Figur 10 ersichtlich, weist die Sperrklinke 7 einen hakenhartigen Vorsprung 13 auf, der in der Schließlage den zweiten Schenkel 5b der U-förmigen Ausnehmung 3b der Drehfalle 2 hintergreift und in dieser Lage sperrt. Dabei ist der hakenartige Vorsprung 13 abgekröpft (bei 12) an der Sperrklinke 7 ausgebildet. Hierdurch ist eine besonders flache Bauweise der Sperrklinke 7 und der Drehfalle 2 ermöglicht. Beispielsweise können flache Stanzteile hierzu verwendet werden.

Auch hierdurch wird auf einfache und langlebige Art und Weise eine Möglichkeit geschaffen, den Schließbügel 1 spielfrei innerhalb der Drehfalle 2 zu fixieren, sodass eine Geräuschbildung, die vom Verbraucher unerwünscht ist, vermieden wird.

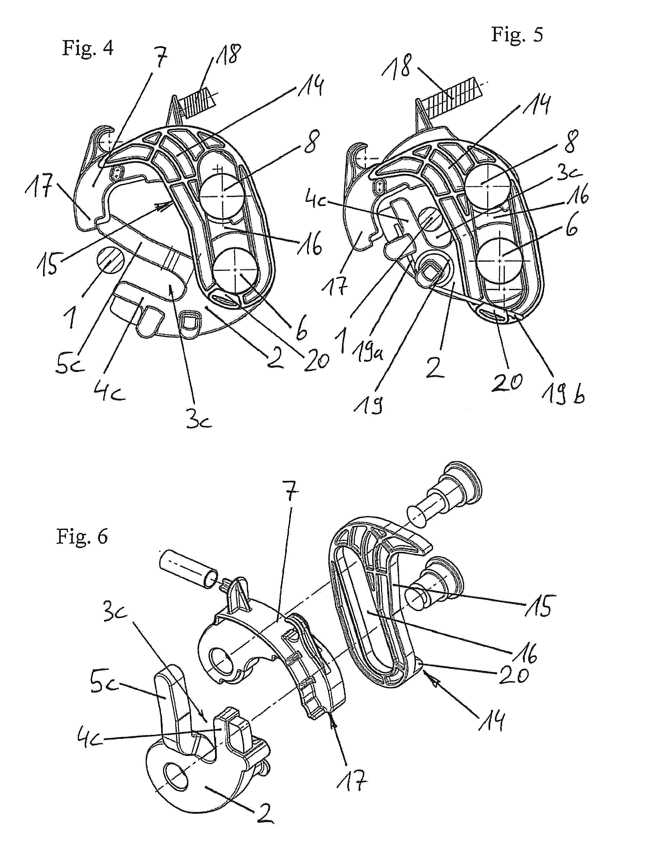

In einem weiteren Ausführungsbeispiel der Erfindung, welches in den Figuren 4 bis 7 gezeigt ist, ist zusätzlich zur Drehfalle 2 und zur Sperrklinke 7 ein Sperrschieber 14 vorgesehen. Der Sperrschieber 14 liegt in der Schließlage (Figur 5) mit einer Druckfläche 15 am Schließbügel 1 an und ist an den Schließbügel 1 angedrückt gehalten. Hierdurch ist der Schließbügel 1 spielfrei zwischen der Druckfläche 15 des Sperrschiebers 14 einerseits und dem ersten Schenkel 4c der U-förmigen Ausnehmung 3c der Drehfalle 2 andererseits fixiert.

Bei diesem Ausführungsbeispiel der Erfindung trifft beim Verstellen aus der Loslage in die Schließlage der Schließbügel 1 zuerst auf den zweiten Schenkel 5c der etwa U-förmigen Ausnehmung 3c der Drehfalle 2 und verschwenkt beim Verstellen der Drehfalle 2 in die Schließlage in einen zwischen den Schenkeln 4c und 5c angeordneten Bereich. Anschließend verschiebt sich der Sperrschieber 14 derart, dass die Druckfläche 15 des Sperrschiebers 14 den Schließbügel 1 kontaktiert und angedrückt an diesen gehalten ist, sodass der Schließbügel 1 spielfrei zwischen der Druckfläche 15 des Sperrschiebers 14 einerseits und den ersten Schenkel 4c der U-förmigen Ausnehmung 3c der Drehfalle 2 andererseits fixiert ist.

Auch hierdurch ist ein spielfreier und somit geräuschloser Sitz des Schließbügels 1 innerhalb der Drehfalle 2 ermöglicht.

Dabei ist der Sperrschieber 14 auf den Schwenkachsen 6, 8 der Drehfalle 2 und der Sperrklinke 7 längsverschieblich angeordnet. Der Sperrschieber 14 weist zur Längsverschiebung ein Langloch 16 als Führungsbestandteil auf, dass länger ist als der Abstand der Schwenkachsen 6,8 voneinander. Dabei bestimmt diese Überlänge den Stellweg des Sperrschiebers 14.

Wie insbesondere aus Figur 4 und Figur 6 ersichtlich, weisen die Schenkel 4c, 5c der U-Form 3c der Drehfalle 2 unterschiedliche Länge auf. Dabei ist der dem Sperrschieber 14 nahe zweite Schenkel 5c länger ausgebildet als der dem Sperrschieber 14 entfernte erste Schenkel 4c.

In der Loslage ist das freie Ende des zweiten Schenkels 5c der U-Form 3c der Drehfalle 2 nahe an dem freien Ende eines hakenartigen Vorsprungs 17 der Sperrklinke 7 angeordnet. Dadurch bildet der zweite Schenkel 5c einen Fang für den Schließbügel 1. Somit bilden in der Loslage der zweite Schenkel 5c und das Langloch 16 des Sperrschiebers 14 etwa eine V-Form. Beim Verschwenken in die Schließlage werden der zweite Schenkel 5c und das Langloch 16 des Sperrschiebers 14 gegensinnig zueinander verschwenkt, sodass sie nahezu parallel zueinander angeordnet sind. Anschließend kann der Sperrschieber 14 in einer etwa parallelen Richtung zum zweiten Schenkel 5c verschoben werden, um mit seiner Druckfläche 15 Druck auf den Schließbügel 1 auszuüben, um diesen spielfrei innerhalb der U-förmigen Ausnehmung 3c, zu fixieren.

Wie insbesondere aus den Figuren 4 und 5 ersichtlich, ist die Sperrklinke 7 in der Loslage (Figur 4) gegen die Kraft einer Feder 18 vorgespannt und in der Schließlage (Figur 5) zumindest teilentspannt.

Wie insbesondere aus den Figuren 5 und 7 ersichtlich ist an der Drehfalle 2 eine weitere Feder in Form einer Schenkelfeder 19 angeordnet. Deren erster Schenkel 19a liegt nahe dem freien Ende des ersten Schenkels 4c der Drehfalle 2 an und deren zweiter Schenkel 19b liegt an einem an dem Sperrschieber 14 ausgebildeten Vorsprung 20 an. Dabei weist der zweite Schenkel 19b der Schenkelfeder 19 eine Form auf, mittels derer beim Verschwenken der Drehfalle 2 aus der Loslage in die Schließlage der Sperrschieber 14 derart vorgespannt gehalten ist, dass die Druckfläche 15 des Sperrschiebers 14 am Schließbügel 1 anliegt, sodass der Schließbügel 1 spielfrei zwischen der Druckfläche 15 des Sperrschiebers 14 einerseits und dem ersten Schenkel 4c der U-förmigen Ausnehmung 3c der Drehfalle 2 andererseits fixiert ist.

Wie insbesondere aus Figur 5 und Figur 7 weiter ersichtlich, hintergreift die Sperrklinke 7 mit dem hakenartigen Vorsprung 17 den dem Sperrschieber 14 abgewandten Schenkel 4c der Drehfalle 2, sodass ein sicherer Verbleib in der Schließlage ermöglicht ist. Dabei sind an dem hakenartigen Vorsprung 17 und dem hintergriffenen Bereich des Schenkels 4c schwingungs- und geräuschdämpfende Mittel, im Ausführungsbeispiel ein Kunststoff, angeordnet.

Bei allen beschriebenen und in den Figuren gezeigten Ausführungsbeispielen können die Drehfalle 2, die Sperrklinke 7 und gegebenenfalls der Sperrschieber 14 innerhalb eines Schlossgehäuses angeordnet sein. Dabei ist die Sperrklinke 7 um eine erste Schwenkachse 8 und die Drehfalle 2 um eine zweite Schwenkachse 6 jeweils innerhalb des Gehäuses verschwenkbar.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

### Bezugszeichenliste:

- 1: Schließbügel
- 2: a) Drehfalle 1. Teil
b) Drehfalle 2. Teil
- 3: a),b),c) U-förmige Ausnehmung
- 4: a),b),c) erster Schenkel von 3
- 5: a),b),c) zweiter Schenkel von 3
- 6: Achse von 2
- 7: Sperrklinke
- 8: Achse von 7
- 9: a),b) Druckfläche
- 10: hakenartige Kontur
- 11: Verlängerung
- 12: Abkröpfung
- 13: hakenartiger Vorsprung an 7 (Figur 8 bis 10)
- 14: Sperrschieber
- 15: Druckfläche an 14
- 16: Langloch an 14
- 17: Vorsprung an 7 (Figur 4 bis 7)
- 18: Feder (an 7)
- 19: Schenkelfeder (Figur 4 bis 7)
a) erster Schenkel von 19
b) zweiter Schenkel von 19
- 20: Vorsprung an 14
- 21: Mittel (an 2 in Fig. 1-3)

## Patentansprüche

1. Kraftfahrzeugschloss, beispielsweise als Hinterlehnenschloss, zumindest bestehend aus einem Schließbügel (1), der beispielsweise an der Hinterseite einer Rückenlehne einer Rücksitzbank eines Kraftfahrzeugs angeordnet ist oder karosserieseitig befestigt ist, einer Drehfalle (2) mit einer etwa U-förmigen Ausnehmung (3a, 3b, 3c) mit einem ersten Schenkel (4a, 4b, 4c) und einem zweiten Schenkel (5a, 5b, 5c) zur Aufnahme und Fixierung des Schließbügels (1), die karosseriefest oder an einer Rückenlehne eines Fahrzeugs um eine Achse (6) drehbar befestigt ist, beispielsweise mittelbar an oder nahe der C-Säule eines Kraftfahrzeugs angeordnet ist, und in einer Schließlage Teile des Schließbügels (1) umgreift und diesen in der Schließlage fixiert und in einer Loslage freigibt, wobei die U-förmige Ausnehmung 3a, 3b, 3c) eine Breite hat, die mindestens gering größer ist als der Querschnitt des in diese eingreifenden Teils des Schließbügels (1), und einer drehbar karosserieseitig oder lehnenseitig befestigten Sperrklinke (7), die in der Schließlage die Drehfalle (2) sperrt, wobei die Drehfalle (2) und die Sperrklinke (7) jeweils um eine Schwenkachse (6,8) gleichsinnig oder gegensinnig zueinander in die Schließlage verschwenkbar sind, in der Teile der Sperrklinke (7) Teile der Drehfalle (2) hintergreifen und diese in dieser Lage sperren, sodass die Rückenlehne in der Schließlage fixiert und in der Loslage verschwenkbar ist,
**dadurch gekennzeichnet, dass** die Drehfalle (2) aus zwei Teilen (2a, 2b) besteht, die um eine beiden gemeinsame Schwenkachse (6) gemeinsam miteinander und relativ zueinander verschwenkbar sind, wobei das erste Teil (2a) der Drehfalle (2) die etwa U- förmige Ausnehmung (3a) aufweist, innerhalb derer in der Schließlage der Schließbügel (1) angeordnet ist, wobei in der Schließlage das zweite Teil (2b) der Drehfalle (2) relativ zum ersten Teil (2a) der Drehfalle (2) verschwenkt ist und an dem Schließbügel (1) anliegt und an den Schließbügel (1) angedrückt gehalten ist, sodass der Schließbügel (1) zwischen dem zweiten Schenkel (5a) der U-förmigen Ausnehmung (3a) einerseits und dem zweiten Teil (2b) der Drehfalle (2) andererseits spielfrei fixiert ist.

2. Kraftfahrzeugschloss nach Anspruch 1,
**dadurch gekennzeichnet, dass** das zweite Teil (2b) der Drehfalle (2) eine Druckfläche (9a) oder Druckkante aufweist, die in einer Zwischenlage zwischen der Loslage und der Schließlage mit einer der Ausnehmung (3a) benachbarten Randkante (9a) mit der Randkante des ersten Schenkels (4a) abschließt sowie mit der Randkante der Druckfläche (9a) über die Randkante des ersten Schenkels (4a) in die Ausnehmung (3a) vorragt oder hinter dieser zurückliegt und etwa deckungsgleich parallel zum ersten Schenkel (4a) der U-förmigen Ausnehmung (3a) angeordnet ist, die in der Schließlage an dem Schließbügel (1) anliegt und an den Schließbügel (1) angedrückt gehalten ist, sodass der Schließbügel (1) zwischen dem zweiten Schenkel (5a) der U-förmigen Ausnehmung (3a) und der Druckfläche (9a) oder Druckkante des zweiten Teils (2b) der Drehfalle (2) spielfrei fixiert ist.

3. Kraftfahrzeugschloss nach Anspruch 1 oder 2,
**dadurch gekennzeichnet, dass** der Abstand der beiden Randkanten der Schenkel (4a, 5a) der U-förmigen Ausnehmung (3a) geringfügig größer ist als der Durchmesser des Schließbügels (1).

4. Kraftfahrzeugschloss nach einem der Ansprüche 1 bis 3,
**dadurch gekennzeichnet, dass** an der Sperrklinke (7) eine etwa U-förmige, hakenartige Kontur (10) ausgebildet ist, die in der die Drehfalle (2) sperrenden Lage Bereiche des ersten und des zweiten Teils (2a, 2b) der Drehfalle (2) umgreift oder hintergreift und gegen ein Verschwenken dieser Teile (2a, 2b) in Richtung der Loslage sperrt und gegebenenfalls das zweite Teil (2b) der Drehfalle (2) geringfügig in Schließrichtung relativ zum ersten Teil der Drehfalle (2) verschwenkt.

5. Kraftfahrzeugschloss nach einem der Ansprüche 1 bis 4,
**dadurch gekennzeichnet, dass** die zweiteilige Drehfalle (2) und/ oder die Sperrklinke (7) jeweils gegen die Kraft einer Feder in der Schließlage gehalten ist beziehungsweise sind.

6. Kraftfahrzeugschloss nach einem der Ansprüche 1 bis 5,
**dadurch gekennzeichnet, dass** an dem ersten und / oder dem zweiten Teil (2a, 2b, 2c) der Drehfalle (2) Mittel (21) angeordnet sind, die die Schwenkbewegung zumindest in Richtung der Loslage begrenzen.

7. Kraftfahrzeugschloss nach dem Oberbegriff des Anspruchs 1,
**dadurch gekennzeichnet, dass** an der Sperrklinke (7) eine Druckfläche (9b) oder Druckkante ausgebildet oder angeordnet ist, die in der Schließlage an dem Schließbügel (1) anliegt und an den Schließbügel (1) angedrückt gehalten ist, sodass der Schließbügel (1) spielfrei zwischen der Druckfläche (9b) oder Druckkante der Sperrklinke (7) einerseits und der Randkante des zweiten Schenkels (5b) der U-förmigen Ausnehmung (3b) der Drehfalle (2) andererseits fixiert ist.

8. Kraftfahrzeugschloss nach Anspruch 7,
**dadurch gekennzeichnet, dass** der erste Schenkel (4b) der U-förmigen Ausnehmung (3b) der Drehfalle (2) eine Verlängerung (11) als Fang für den Schließbügel (1) aufweist, die eine Einlaufschräge für den Schließbügel (1) beim Verstellen aus der Loslage in die Schließlage bildet, die insbesondere durch eine Verkröpfung oder eine Schrägfläche gebildet ist.

9. Kraftfahrzeugschloss nach Anspruch 7 oder 8,
**dadurch gekennzeichnet, dass** die Sperrklinke (7) einen hakenartigen Vorsprung (13) aufweist, der in der Schließlage den zweiten Schenkel (5b) der U-förmigen Ausnehmung (3b) der Drehfalle (2) hintergreift und in dieser Lage sperrt, wobei das den hakenartigen Vorsprung (13) aufweisende Ende der Sperrklinke (7) abgekröpft (bei 12) an der Sperrklinke (7) ausgebildet oder angeordnet ist.

10. Kraftfahrzeugschloss nach dem Oberbegriff des Anspruchs 1,
**dadurch gekennzeichnet, dass** zusätzlich zur Drehfalle (2) und zur Sperrklinke (7) ein Sperrschieber (14) vorgesehen ist, der in der Schließlage mit einer Druckfläche (15) am Schließbügel (1) anliegt und an den Schließbügel (1) angedrückt gehalten ist, sodass der Schließbügel (1) spielfrei zwischen der Druckfläche (15) des Sperrschiebers (14) einerseits und dem ersten Schenkel (4c) der U-förmigen Ausnehmung (3c) der Drehfalle (2) andererseits fixiert ist.

11. Kraftfahrzeugschloss nach Anspruch 10,
**dadurch gekennzeichnet, dass** der Sperrschieber (24) auf den Schwenkachsen (6,8) der Drehfalle (2) und der Sperrklinke (7) längsverschieblich angeordnet oder geführt ist, wobei der Sperrschieber (14) ein Langloch (16) als Führungsbestandteil aufweist, das länger ist als der Abstand der Schwenkachsen (6, 8) voneinander, wobei diese Überlänge den Stellweg des Sperrschiebers (14) bestimmt.

12. Kraftfahrzeugschloss nach einem der Ansprüche 10 oder 11,
**dadurch gekennzeichnet, dass** die Schenkel (4c, 5c) der U-Form (3c) der Drehfalle (2) unterschiedliche Länge aufweisen, wobei der dem Sperrschieber (14) nahe zweite Schenkel (5c) länger ausgebildet ist als der dem Sperrschieber (14) entfernte erste Schenkel (4c).

13. Kraftfahrzeugschloss nach einem der Ansprüche 11 bis 13,
**dadurch gekennzeichnet, dass** in der Loslage das freie Ende des zweiten Schenkels (5c) der U-Form (3c) der Drehfalle (2) an oder nahe an dem freien Ende eines hakenartigen Vorsprungs (17) der Sperrklinke (7) anliegend gehalten ist, sodass der zweite Schenkel (5c) einen Fang für den Schließbügel (1) bildet, wobei in der Loslage der zweite Schenkel (5c) und das Langloch (16) des Sperrschiebers (14) etwa eine V-Form bildend angeordnet sind und in der Schließlage gegensinnig zueinander verschwenkt sind, sodass sie nahezu parallel zueinander angeordnet sind.

14. Kraftfahrzeugschloss nach einem der Ansprüche 10 bis 13,
**dadurch gekennzeichnet, dass** die Sperrklinke (7) in der Loslage gegen die Kraft einer Feder (18) vorgespannt und in der Schließlage zumindest teilentspannt ist.

15. Kraftfahrzeugschloss nach einem der Ansprüche 10 bis 14,
**dadurch gekennzeichnet, dass** an der Drehfalle (2) eine Feder, insbesondere eine Schenkelfeder (19), angeordnet ist, deren erster Schenkel (19a) nahe dem freien Ende des ersten Schenkels (4c) der Drehfalle (2) und deren zweiter Schenkel (19b) an einem an dem Sperrschieber (14) angeordneten oder ausgebildeten Vorsprung (20) anliegt, wobei der zweite Schenkel (19b) der Schenkelfeder (19) eine Form aufweist, mittels derer beim Verschwenken der Drehfalle (2) aus der Loslage in die Schließlage der Sperrschieber (14) derart vorgespannt gehalten ist, dass die Druckfläche (15) des Sperrschiebers (14) am Schließbügel (1) anliegt, sodass der Schließbügel (1) spielfrei zwischen der Druckfläche (15) des Sperrschiebers (14) einerseits und dem ersten Schenkel (4c) der U-förmigen Ausnehmung (3c) der Drehfalle (2) andererseits fixiert ist.

16. Kraftfahrzeugschloss nach einem der Ansprüche 13 bis 15,
**dadurch gekennzeichnet, dass** die Sperrklinke (7) den dem Sperrschieber (14) abgewandten Schenkel (4c) der Drehfalle (2) mit dem hakenartigen Vorsprung (17) hintergreift, wobei an dem hakenartigen Vorsprung (17) und / oder dem hintergriffenen Bereich des Schenkels (4c) schwingungs- und geräuschdämpfende Mittel, beispielsweise ein Elastomerpolster, angeordnet ist beziehungsweise sind.

17. Kraftfahrzeugschloss nach einem der Ansprüche 1 bis 16,
**dadurch gekennzeichnet, dass** die Drehfalle (2), die Sperrklinke (7) und gegebenenfalls der Sperrschieber (14) innerhalb eines Schlossgehäuses angeordnet sind, wobei die Sperrklinke (7) um eine erste Schwenkachse (8) und die Drehfalle (2) um eine zweite Schwenkachse (6) jeweils innerhalb des Gehäuses verschwenkbar sind.
